# EUROPÄISCHE PATENTSCHRIFT

(11) **EP 1 235 977 B1**
(45) Veröffentlichungstag und Bekanntmachung des Hinweises auf die Patenterteilung: **31.05.2006**
(21) Anmeldenummer: 00993272.4
(22) Anmeldetag: 15.11.2000
(51) Int. Cl.: F01N 3/20

(54) **VERFAHREN UND VORRICHTUNG ZUR STEUERUNG EINER AUFHEIZPHASE ZUMINDEST EINES IN EINEM ABGASKANAL EINER VERBRENNUNGSKRAFTMASCHINE ANGEORDNETEN KATALYSATORS**
METHOD AND DEVICE FOR CONTROLLING A HEATING PHASE OF AT LEAST ONE CATALYTIC CONVERTER IN AN EXHAUST CHANNEL OF AN INTERNAL COMBUSTION ENGINE
PROCEDE ET DISPOSITIF POUR COMMANDER UNE PHASE DE CHAUFFAGE D'AU MOINS UN CATALYSEUR PLACE DANS LE CANAL D'ECHAPPEMENT DES GAZ D'UN MOTEUR A COMBUSTION INTERNE

(30) Priorität: 27.11.1999 DE 19957185
(43) Veröffentlichungstag der Anmeldung: 04.09.2002
(73) Patentinhaber: Volkswagen Aktiengesellschaft, 38436 Wolfsburg (DE)
(72) Erfinder: POTT, Ekkehard, 38518 Gifhorn (DE); LINDLAU, Michael, 38162 Cremlingen (DE); HAHN, Hermann, 30175 Hannover (DE)
(74) Vertreter: Schneider, Henry
(86) Internationale Anmeldenummer: PCT/EP2000/011304
(87) Internationale Veröffentlichungsnummer: WO 2001/040635

(56) Entgegenhaltungen:
- EP-A- 0 896 142
- DE-A- 4 139 291
- DE-C- 19 639 146
- US-A- 5 184 463

## Beschreibung

Die Erfindung betrifft ein Verfahren und eine Vorrichtung zur Steuerung einer Aufheizphase zumindest eines in einem Abgaskanal einer Verbrennungskraftmaschine angeordneten Katalysators mit den in den Oberbegriffen der Ansprüche 1 und 8 genannten Merkmalen.

Aus dem Stand der Technik sind Maßnahmen bekannt, bei denen ein Abgas der Verbrennungskraftmaschine zur Reinigung durch die im Abgaskanal angeordneten Katalysatoren geleitet wird. Während einer Verbrennung eines Luft-Kraftstoff-Gemisches entstehen in unterschiedlichen Anteilen Reduktionsmittel, wie Kohlenmonoxid CO, unverbrannte Kohlenwasserstoffe HC oder Wasserstoff H₂, als auch Oxidationsmittel, wie Stickoxide NOₓ. An den Katalysatoren werden diese Schadstoffe zu weniger umweltrelevanten Produkten umgesetzt. Derartige Katalysatoren bestehen zumeist aus einem auf einem inerten Träger aufgebrachten, katalytisch aktiven Edelmetall. Eine ausreichende Umsetzung der Schadstoffe kann erst nach Erreichen einer Aktivitätstemperatur sichergestellt werden. Daher ist es notwendig, nach einem Start, insbesondere einem Kaltstart der Verbrennungskraftmaschine, eine Aufheizphase einzuleiten. Während der Aufheizphase werden Heizmaßnahmen durch eine Beeinflussung der Betriebsparameter der Verbrennungskraftmaschine ergriffen. So kann beispielsweise eine Änderung eines Zündwinkels, eine Doppeleinspritzung oder eine Erhöhung eines Reduktionsmittelanteiles im Abgas eingeleitet werden.

Weiterhin ist der Einsatz sogenannter NOₓ-Speicherkatatysatoren bekannt, die in Phasen magerer Atmosphäre NOₓ einlagern, um dieses wieder in Phasen stöchiometrischer oder fetter Atmosphäre zu desorbieren und an dem Katalysator zu N₂ zersetzen. Beim Einsatz schwefelhaltiger Kraftstoffe werden zusätzlich Schwefeloxide SOₓ eingelagert, deren Desorption allerdings wesentlich höhere Temperaturen erfordert. Bei beiden Vorgängen müssen zunächst die erforderlichen Regenerationstemperaturen durch Einleitung geeigneter Heizmaßnahmen eingestellt werden.

Da die Heizmaßnahmen zu einem erheblichen Mehrverbrauch führen, ist es notwendig, die Aufheizphase möglichst kurz zu halten. Bei den bekannten Verfahren wird dazu beispielsweise nach Motorstart ein applizierbarer kumulierter Luft- oder Kraftstoffdurchsatz, eine applizierbare Zeit, eine bestimmte Kühlmitteltemperatur oder eine vor oder nach den Katalysatoren applizierbare Abgastemperatur berücksichtigt. Beispielsweise werden nach einem in der US 5,184,463 beschriebenen Verfahren die nach einem Motorkalt- oder -warmstart durchgeführten Heizmaßnahmen unterbrochen, wenn eine Temperaturschwelle überschritten wird, eine Motordrehzahl oder eine Motorlast vorgegebene Schwellenwerte überschreitet, eine vorgegebene Zeitdauer überschritten wird oder dergleichen. Aus der DE 198 39 146 C1 ist eine Brennkraftmaschine mit einem stromauf eines Katalysators angeordneten Abgasturbolader und einer den Turbolader überbrückenden Bypassleitung bekannt, wobei die Bypassleitung nach einem Motorstart bei einer unterhalb eines Schwellenwertes liegenden Motorlast zur Katalysatoraufheizung geöffnet und bei oberhalb des Schwellenwertes liegender Motorlast geschlossen wird. Nachteilig bei diesen Verfahren ist es, daß die Dauer der Heizmaßnahmen nur ungenügend mit einer Motorlast und einer daraus resultierenden Temperaturverteilung des Katalysators korreliert wird. Dies kann zu unnötig verlängerten Aufheizphasen und damit zu einem erhöhten Kraftstoffverbrauch führen.

Der Erfindung liegt die Aufgabe zugrunde, ein Verfahren und eine Vorrichtung zur Durchführung einer Aufheizphase zur Verfügung zu stellen, mit denen eine Dauer der Aufheizphase optimal an einen Motorbetriebspunkt angepasst wird, um möglichst kurze Aufheizphasen bei sicherer Katalysatorerwärmung zu gewährleisten.

Mit Hilfe des Verfahrens und der Vorrichtung mit den in den Ansprüchen 1 und 8 genannten Merkmalen kann ein unnötiger Mehrverbrauch in der Aufheizphase vermieden werden. Es ist vorgesehen, während der Aufheizphase eine Motorlast zu ermitteln und die Heizmaßnahmen in Lastphasen, in denen die Motorlast oberhalb einer Lastschwelle liegt, zumindest teilweise zu unterbinden (nicht aktive Phasen). Eine maximale Dauer (tₘₐₓ) der Heizmaßnahmen wird anhand eines Parameter umfassenden Modells bestimmt und die maximale Dauer (tₘₐₓ) in Abhängigkeit von einer Dauer (tₙₐ) der nicht aktiven Phasen gemindert, um eine tatsächliche Dauer (tₜ) der Heizmaßnahmen zu liefern. Auf diese Weise ist es möglich, eine lastabhängige Steuerung der Heizmaßnahmen zu verwirklichen, die die Heizdauer optimal auf einen Motorbetriebspunkt und somit die herrschenden Temperaturverhältnisse abstimmt.

Vorzugsweise umfaßt das Modell zur Bestimmung der maximalen Dauer der Heizmaßnahme Parameter wie die kumulierten Luft- und Kraftstoffdurchsätze, eine vorgegebene Mindestheizzeit, die Umgebungs- und Kühlmitteltemperaturen, die Abgastemperaturen vor und nach den Katalysatoren und die gemessenen oder modellierten Katalysatortemperaturen. Bei der anschließenden Minderung der maximalen Dauer in Abhängigkeit von der Dauer der nicht aktiven Phasen kann selbstverständlich eine Gewichtung jeder einzelnen nicht aktiven Phase entsprechend der dort auftretenden Last/Drehzahl erfolgen. Insgesamt kann damit die tatsächliche Dauer der Heizmaßnahme gegenüber den herkömmlichen Verfahren verkürzt werden.

Weiterhin hat es sich als vorteilhaft erwiesen, die Lastschwelle anhand eines weiteren Modells, das Parameter umfaßt, wie die kumulierten Luft- oder Kraftstoffdurchsätze, die Kühlmittel- und Umgebungstemperaturen, die Abgastemperaturen vor und nach den Katalysatoren und die gemessenen oder modellierten Katalysatortemperaturen, festzulegen. Auf diese Weise kann sehr flexibel auf die jeweilige Fahrsituation hinsichtlich einer zu ergreifenden Heizmaßnahme reagiert werden.

Die aufgezeigten Maßnahmen haben sich als besonders vorteilhaft erwiesen für Aufheizphasen, die zum Erreichen der Aktivitätstemperatur nach einem Start der Verbrennungskraftmaschine und/oder zum Erreichen einer Regenerationstemperatur für einen NOₓ-Katalysator eingeleitet werden müssen. Als Heizmaßnahmen kommen dabei beispielsweise in Frage die Änderung des Zündwinkels, die Doppeleinspritzung oder die Erhöhung des Anteils der Reduktionsmittel am Abgas. Letztere Maßnahme führt zu einem erhöhten exothermen Umsatz an den Katalysatoren.

Die Motorlast kann vorzugsweise anhand einer aktuellen Einspritzmenge bestimmt werden oder mit Hilfe bekannter Modelle berechnet werden.

Es ist dabei femer vorteilhaft, wenn die Vorrichtung eine Steuereinheit umfaßt, in der eine zur Steuerung der Aufheizphase notwendige Prozedur hinterlegt ist. Eine solche Steuereinheit kann vorteilhafterweise in das zumeist bereits vorhandene Motorsteuergerät integriert werden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Prinzipdarstellung einer Verbrennungskraftmaschine mit einer Abgasreinigungsanlage und Mitteln zur Beeinflussung einer Aufheizphase und
- Figur 2: einen zeitlichen Verlauf einer Motorlast und korrespondierender Aufheizphasen.

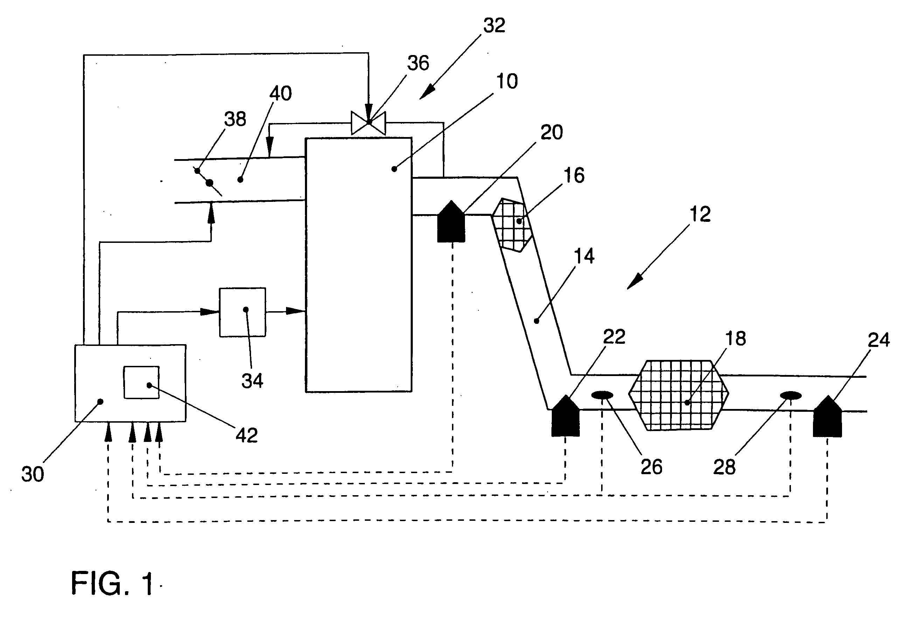

Die Figur 1 zeigt in schematischer Weise eine Verbrennungskraftmaschine 10 mit einer nachgeschalteten Abgasreinigungsanlage 12. Ein während einer Verbrennung eines Luft-Kraftstoff-Gemisches entstehendes Abgas wird zur Reinigung durch die Abgasreinigungsanlage 12 geführt. Die Abgasreinigungsanlage 12 ist in einem Abgaskanal 14 angeordnet und umfaßt einen Vorkatalysator 16 sowie einen Hauptkatalysator 18, die zur Erzielung eines ausreichend hohen Umsatzes mindestens auf die jeweilige Aktivitätstemperatur erhitzt werden müssen. Beide Katalysatoren 16, 18 können beispielsweise 3-Wege-Katalysatoren und/oder Oxidationskatalysatoren sein. Denkbar ist auch, den Katalysator 18 als NOₓ-Speicherkatalysator auszulegen, so daß die nachfolgend beschriebene Vorrichtung und das Verfahren zur Steuerung der Heizmaßnahmen ebenfalls zur Durchführung einer Regenerationsmaßnahme (NOₓ₋oder SOₓ-Regeneration) genutzt werden können.

Üblicherweise steht in dem Abgaskanal 14 eine Sensorik zur Erfassung ausgewählter Betriebsparameter zur Verfügung. So kann beispielsweise über die Gassensoren 20, 22, 24 ein Anteil einer Gaskomponente am Abgas bestimmt werden oder über die Temperatursensoren 26, 28 eine Abgastemperatur vor beziehungsweise nach dem Katalysator 18 erfaßt werden.

Zur Steuerung eines Betriebsmodus der Verbrennungskraftmaschine 10 dient ein Motorsteuergerät 30. Mit Hilfe des Motorsteuergerätes 30 können die notwendigen Heizmaßnahmen durch Vorgabe von Stellgrößen für ausgewählte Stellglieder der Verbrennungskraftmaschine 10 durchgeführt werden. Als Stellglieder kommen beispielsweise in Frage eine Abgasrückführeinrichtung 32 und ein Einspritzsystem 34. Die Abgasrückführeinrichtung 32 umfaßt dabei ein Abgasrückführventil 36 und eine Drosselklappe 38 in einem Ansaugrohr 40. Durch das Einspritzsystem 34 können beispielsweise eine Einspritzdauer, ein Zündwinkel, eine Einspritzmenge und ein Einspritzzeitpunkt in bekannter Weise vorgegeben werden. Durch die hier exemplarisch dargestellten Stellglieder 32, 34 können demnach beispielsweise Heizmaßnahmen, wie eine Änderung des Zündwinkels, eine Doppeleinspritzung oder eine Erhöhung des Anteils der Reduktionsmittel am Abgas, eingeleitet werden.

In das Motorsteuergerät 30 kann eine Steuereinheit 42 aufgenommen werden, in der eine Prozedur zur Steuerung der Aufheizphase, wie sie nachfolgend näher erläutert wird, hinterlegt ist. Die Steuereinheit 42 kann selbstverständlich auch unabhängig von dem Motorsteuergerät 30 realisiert werden.

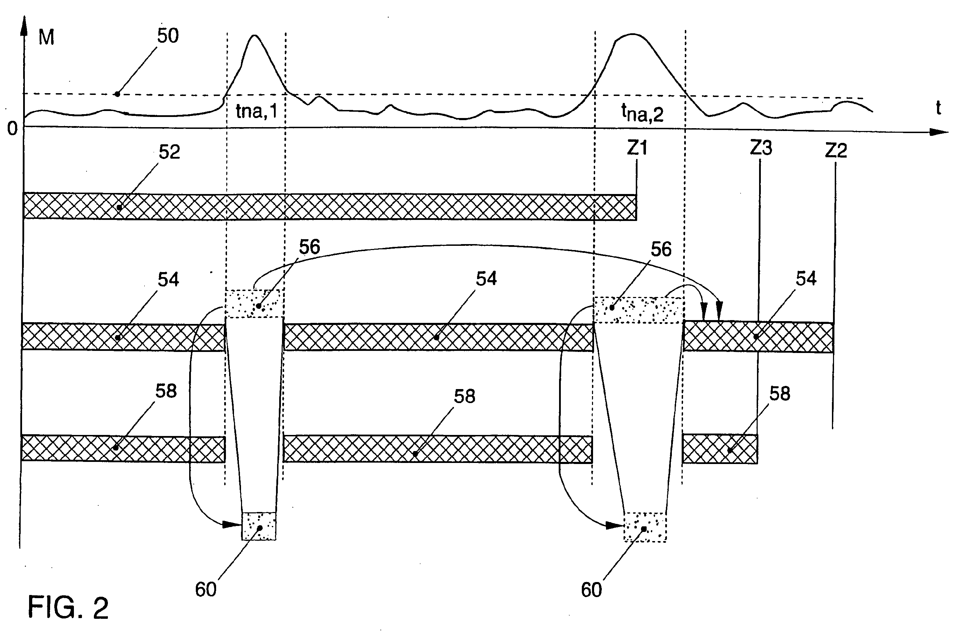

In der Figur 2 sind ein Verlauf der Motorlast M und korrespondierender Aufheizphasen dargestellt. Die Motorlast kann beispielsweise anhand einer aktuellen Einspritzmenge bestimmt oder mit Hilfe bekannter Modelle berechnet werden. Der Verlauf der Motorlast zeigt insgesamt zwei Lastphasen t_{na,1} und t_{na,2}, die beispielsweise infolge einer starken Beschleunigung oder einer Bergauffahrt auftreten können. In den Phasen erhöhter Last sind zumeist die Abgastemperaturen am Motoraustritt ebenfalls erhöht.

Zunächst wird eine maximale Dauer tₘₐₓ für die Heizmaßnahmen zur Erreichung einer Zieltemperatur (Aktivitäts- oder Regenerationstemperatur) - repräsentiert durch den oberen dunklen Balken 52 - ermittelt. Dies kann beispielsweise derart erfolgen, daß die Bestimmung anhand eines Modells, das Parameter umfaßt wie die kumulierten Luft-und Kraftstoffdurchsätze, eine vorgegebene Mindestheizzeit, die Umgebungs- und Kühlmitteltemperaturen, die Abgastemperaturen vor und nach den Katalysatoren und die gemessenen oder modellierten Katalysatortemperaturen erfolgt. Die maximale Dauer tₘₐₓ der Heizmaßnahmen entspricht damit der gesamten Aufheizphase und endet zu einem Zeitpunkt Z₁.

Liegt die Motorlast oberhalb einer Lastschwelle 50, wie es in den Fällen der Lastphasen t_{na,1} und t_{na,2} der Fall ist, werden in diesen Phasen die Heizmaßnahmen unterbunden (nicht aktive Phasen).

Die Lastschwelle 50 kann anhand eines Modells, das Parameter umfaßt wie die kumulierten Luft- und Kraftstoffdurchsätze nach Beginn der Heizmaßnahmen, die Kühlmittel- und Umgebungstemperaturen, die Abgastemperaturen vor und nach den Katalysatoren und die gemessenen oder modellierten Katalysatortemperaturen, bestimmt werden. So kann die Lastschwelle 50 - anders als hier dargestellt - auch beispielsweise stufenförmig während der Aufheizphase den jeweiligen Fahrsituationen angepaßt werden.

Die Aufheizphase wird demnach für die Dauer tₙₐ der nicht aktiven Phasen (helle Balken 56) unterbrochen, die nicht aktiven Phasen kumuliert und die Aufheizphase entsprechend verlängert, so daß diese zu einem Zeitpunkt Z₂ endet (die Aufheizphase entspricht damit den Balken 54, 56). Anschließend wird die maximale Dauer tₘₐₓ in Abhängigkeit von der Dauer tₙₐ der nicht aktiven Phasen gemindert, um eine tatsächliche Dauer tₜ der Heizmaßnahmen zu liefern (Balken 58). Eine Gewichtung der Dauer tₙₐ kann mit Hilfe eines Bewertungsfaktors durchgeführt werden. Der Bewertungsfaktor selber kann wiederum über ein Kennfeld in Abhängigkeit von Last beziehungsweise Drehzahl der Verbrennungskraftmaschine 10 festgelegt werden. Gemäß dem Ausführungsbeispiel werden die beiden nicht aktiven Phasen verkürzt (Balken 60) und die tatsächliche Dauer tₜ der Heizmaßnahmen ist damit kleiner als die maximale Dauer tₘₐₓ. Die Aufheizphase endet in diesem Fall bereits zu einem Zeitpunkt Z₃.

## Patentansprüche

1. Verfahren zur Steuerung einer Aufheizphase zumindest eines in einem Abgaskanal (14) einer Verbrennungskraftmaschine (10) angeordneten Katalysators (16, 18), wobei während der Aufheizphase Heizmaßnahmen durch Beeinflussung von Betriebsparametern der Verbrennungskraftmaschine (10) ergriffen werden und wobei während der Aufheizphase eine Motorlast ermittelt wird und die Heizmaßnahmen in Lastphasen, in denen eine Motorlast oberhalb einer Lastschwelle (50) ermittelt wird, zumindest teilweise unterbunden werden (nicht aktive Phasen), **dadurch gekennzeichnet, daß** eine maximale Dauer (tₘₐₓ) der Heizmaßnahmen anhand eines Parameter umfassenden Modells bestimmt wird und die maximale Dauer (tₘₐₓ) in Abhängigkeit von einer Dauer (tₙₐ) der nicht aktiven Phasen gemindert wird, um eine tatsächliche Dauer (tₜ) der Heizmaßnahmen zu liefern.

2. Verfahren nach Anspruch 1, **dadurch gekennzeichnet, daß** das Modell zur Bestimmung der maximalen Dauer (tₘₐₓ) der Heizmaßnahmen als Parameter kumulierte Luft- und Kraftstoffdurchsätze, eine vorgegebene Mindestheizzeit, Umgebungs- und Kühlmitteltemperaturen, Abgastemperaturen vor und nach den Katalysatoren und/oder die gemessenen oder modellierten Katalysatortemperaturen umfasst.

3. Verfahren nach Anspruch 2, **dadurch gekennzeichnet, daß** eine Gewichtung der nicht aktiven Phasen mit Hilfe eines Bewertungsfaktors erfolgt, wobei der Bewertungsfaktor aus einem Kennfeld für die Motorlast oder Motordrehzahl ausgelesen wird.

4. Verfahren nach einem der Ansprüche 1 bis 3, **dadurch gekennzeichnet, daß** die Lastschwelle (50) anhand eines Modells, das Parameter umfaßt, wie die kumulierten Luft- oder Kraftstoffdurchsätze nach Beginn der Heizmaßnahmen, die Kühlmittel- und Umgebungstemperaturen, die Abgastemperaturen vor und nach den Katalysatoren und die gemessenen oder modellierten Katalysatortemperaturen, bestimmt wird.

5. Verfahren nach einem der vorhergehenden Ansprüche, **dadurch gekennzeichnet, daß** die Aufheizphase zum Erreichen einer Aktivitätstemperatur nach einem Start der Verbrennungskraftmaschine und/oder zum Erreichen einer Regenerationstemperatur für einen NOₓ-Speicherkatalysator eingeleitet wird.

6. Verfahren nach einem der vorhergehenden Ansprüche, **dadurch gekennzeichnet, daß** die Heizmaßnahmen die Änderungen eines Zündwinkels, eine Doppeleinspritzung oder eine Erhöhung eines Anteils der Reduktionsmittel am Abgas umfassen.

7. Verfahren nach einem der vorhergehenden Ansprüche, **dadurch gekennzeichnet, daß** die Motorlast anhand einer aktuellen Einspritzmenge bestimmt wird oder mit einem Modell berechnet wird.

8. Vorrichtung zur Steuerung einer Aufheizphase zumindest eines in einem Abgaskanal einer Verbrennungskraftmaschine (10) angeordneten Katalysators (16, 18), wobei während der Aufheizphase Heizmaßnahmen durch Beeinflussung von Betriebsparametern der Verbrennungskraftmaschine (10) vorgesehen sind und wobei während der Aufheizphase eine Ermittlung einer Motorlast und eine zumindest teilweise Unterbindung der Heizmaßnahmen in Lastphasen, in denen eine Motorlast oberhalb einer Lastschwelle (50) ermittelt ist (nicht aktive Phasen), vorgesehen ist, **gekennzeichnet durch** Mittel, mit denen eine Bestimmung einer maximalen Dauer (tₘₐₓ) der Heizmaßnahmen anhand eines Parameter umfassenden Modells und eine Minderung der maximalen Dauer (tₘₐₓ) in Abhängigkeit von einer Dauer (tₙₐ) der nicht aktiven Phasen durchführbar ist, um eine tatsächliche Dauer (tₜ) der Heizmaßnahmen zu liefern.

9. Vorrichtung nach Anspruch 8, **dadurch gekennzeichnet, daß** die Mittel eine Steuereinheit (42) umfassen, in der eine Prozedur zur Steuerung der Aufheizphase hinterlegt ist.

10. Vorrichtung nach Anspruch 9, **dadurch gekennzeichnet, daß** die Steuereinheit (42) Teil eines Motorsteuergerätes (30) ist.

11. Vorrichtung nach einem der Ansprüche 8 bis 10, **dadurch gekennzeichnet, daß** der zumindest eine Katalysator (16, 18) ein 3-Wege-Katalysator, ein Oxidationskatalysator und/oder ein NOₓ-Speicherkatalysator ist.

## Claims

1. Method for controlling a heat-up phase of at least one catalytic converter (16, 18) arranged in an exhaust-gas duct (14) of an internal combustion engine (10), heating measures being taken during the heat-up phase by influencing operating parameters of the internal combustion engine (10), and an engine load being determined during the heat-up phase and the heating measures being at least partially suppressed in load phases in which an engine load above a load threshold (50) is determined (inactive phases), **characterized in that** a maximum duration (tₘₐₓ) of the heating measures is determined on the basis of a model comprising parameters, and the maximum duration (tₘₐₓ) is reduced as a function of a duration (tₙₐ) of the inactive phases, in order to provide an actual duration (tₜ) of the heating measures.

2. Method according to Claim 1, **characterized in that** the model for determining the maximum duration (tₘₐₓ) of the heating measures comprises as parameters cumulative air and fuel throughputs, a predetermined minimum heating time, ambient and coolant temperatures, exhaust-gas temperatures upstream and downstream of the catalytic converters and/or the measured or modelled catalytic converter temperatures.

3. Method according to Claim 2, **characterized in that** the inactive phases are weighted with the aid of an evaluation factor, the evaluation factor being read out of an engine map for the engine load or engine speed.

4. Method according to one of Claims 1 to 3, **characterized in that** the load threshold (50) is determined on the basis of a model, which comprises parameters, such as the cumulative air or fuel throughputs after the beginning of the heating measures, the coolant and ambient temperatures, the exhaust-gas temperatures upstream and downstream of the catalytic converters and the measured or modelled catalytic converter temperatures.

5. Method according to one of the preceding claims, **characterized in that** the heat-up phase is initiated to reach an activity temperature after the internal combustion engine has been started and/or to reach a regeneration temperature for an NOₓ storage catalytic converter.

6. Method according to one of the preceding claims, **characterized in that** the heating measures comprise the changes in an ignition angle, a double injection or an increase in the level of the reducing agents in the exhaust gas.

7. Method according to one of the preceding claims, **characterized in that** the engine load is determined on the basis of a current injection quantity or is calculated using a model.

8. Device for controlling a heat-up phase of at least one catalytic converter (16, 18) arranged in an exhaust-gas duct of an internal combustion engine (10), heating measures being provided during the heat-up phase by influencing operating parameters of the internal combustion engine (10), and determination of an engine load and at least partial suppression of the heating measures in load phases in which an engine load above a load threshold (50) is determined (inactive phases) being provided during the heat-up phase, **characterized by** means which can be used to determine a maximum duration (tₘₐₓ) of the heating measures on the basis of a model comprising parameters and to reduce the maximum duration (tₘₐₓ) as a function of a duration (tₙₐ) of the inactive phases, in order to provide an actual duration (tₜ) of the heating measures.

9. Device according to Claim 8, **characterized in that** the means comprise a control unit (42) in which a procedure for controlling the heat-up phase is stored.

10. Device according to Claim 9, **characterized in that** the control unit (42) is part of an engine control unit (30).

11. Device according to one of Claims 8 to 10, **characterized in that** the at least one catalytic converter (16, 18) is a three-way catalytic converter, an oxidation catalytic converter and/or an NOₓ storage catalytic converter.

## Revendications

1. Procédé pour commander une phase de chauffage d'au moins un catalyseur (16, 18) placé dans un canal d'échappement (14) des gaz d'un moteur à combustion interne (10), dans lequel on prend, pendant la phase de chauffage, des mesures de chauffage en influençant des paramètres de fonctionnement du moteur à combustion interne (10) et dans lequel, pendant la phase de chauffage, on détermine une charge du moteur et on interrompt au moins partiellement les mesures de chauffage pendant des phases de charge (phases non actives), dans lesquelles on détermine une charge du moteur supérieure à un seuil de charge (50), **caractérisé en ce que** l'on détermine une durée maximale (tₘₐₓ) des mesures de chauffage au moyen d'un modèle comprenant des paramètres et on diminue la durée maximale (tₘₐₓ) en fonction d'une durée (tₙₐ) des phases non actives, afin de fournir une durée effective (tₜ) des mesures de chauffage.

2. Procédé selon la revendication 1, **caractérisé en ce que** le modèle pour la détermination de la durée maximale (tₘₐₓ) des mesures de chauffage comprend comme paramètres les débits cumulés d'air et de carburant, une durée de chauffage minimale prédéterminée, la température ambiante et la température du fluide de refroidissement, les températures des gaz d'échappement avant et après les catalyseurs et/ou les températures mesurées ou modélisées des catalyseurs.

3. Procédé selon la revendication 2, **caractérisé en ce que** l'on effectue une pondération des phases non actives à l'aide d'un facteur d'évaluation, dans lequel le facteur d'évaluation est lu dans un diagramme caractéristique de la charge du moteur ou du régime du moteur.

4. Procédé selon l'une quelconque des revendications 1 à 3, **caractérisé en ce que** le seuil de charge (50) est déterminé à l'aide d'un modèle, qui comprend des paramètres, comme les débits cumulés d'air et de carburant après le commencement des mesures de chauffage, la température ambiante et la température du fluide de refroidissement, les températures des gaz d'échappement avant et après les catalyseurs et les températures mesurées ou modélisées des catalyseurs.

5. Procédé selon l'une quelconque des revendications précédentes, **caractérisé en ce que** la phase de chauffage pour atteindre une température d'activité est lancée après un démarrage du moteur à combustion interne et/ou après avoir atteint une température de régénération pour un catalyseur accumulateur de NOₓ.

6. Procédé selon l'une quelconque des revendications précédentes, **caractérisé en ce que** les mesures de chauffage comprennent le changement d'un angle d'allumage, une double injection ou une augmentation d'une fraction des agents réducteurs dans les gaz d'échappement.

7. Procédé selon l'une quelconque des revendications précédentes, **caractérisé en ce que** l'on détermine la charge du moteur à l'aide d'une quantité d'injection actuelle ou on la calcule avec un modèle.

8. Dispositif pour commander une phase de chauffage d'au moins un catalyseur (16, 18) placé dans un canal d'échappement des gaz d'un moteur à combustion interne (10), dans lequel il est prévu, pendant la phase de chauffage, des mesures de chauffage en influençant des paramètres de fonctionnement du moteur à combustion interne (10) et dans lequel, pendant la phase de chauffage, il est prévu de déterminer une charge du moteur et d'interrompre au moins partiellement les mesures de chauffage pendant des phases de charge (phases non actives), dans lesquelles on détermine une charge du moteur supérieure à un seuil de charge (50), **caractérisé par** des moyens avec lesquels on peut effectuer une détermination d'une durée maximale (tₘₐₓ) des mesures de chauffage au moyen d'un modèle comprenant des paramètres et une diminution de la durée maximale (tₘₐₓ) en fonction d'une durée (tₙₐ) des phases non actives, afin de fournir une durée effective (tₜ) des mesures de chauffage.

9. Dispositif selon la revendication 8, **caractérisé en ce que** les moyens comprennent une unité de commande (42), dans laquelle une procédure de conduite de la phase de chauffage est mémorisée.

10. Dispositif selon la revendication 9, **caractérisé en ce que** l'unité de commande (42) fait partie d'un appareil de commande du moteur (30).

11. Dispositif selon l'une quelconque des revendications 8 à 10, **caractérisé en ce qu'**au moins un catalyseur (16, 18) est un catalyseur à trois voies, un catalyseur d'oxydation et/ou un catalyseur accumulateur de NOₓ.
